# EUROPEAN PATENT APPLICATION

(11) **EP 3 543 564 A1**
(43) Date of publication of application: **25.09.2019**
(21) Application number: 17871790.6
(22) Date of filing: 23.10.2017
(51) Int. Cl.: F16H 63/20, F16H 61/34

(54) **SHIFT GUIDE STRUCTURE**

(30) Priority: 17.11.2016 JP 2016224554
(71) Applicant: Aisin AI Co., Ltd., Nishio-shi, Aichi 445-0006 (JP)
(72) Inventor: HABARA, Yuuki, Nishio-shi Aichi 445-0006 (JP); SAJI, Naoki, Nishio-shi Aichi 445-0006 (JP)
(74) Representative: TBK
(86) International application number: PCT/JP2017/038221
(87) International publication number: WO 2018/092522

(57) **Abstract**

A shift guide structure of a transmission includes a guide pin located on one of a shift-and-select shaft and a case, the shift-and-select shaft being supported by the case and axially and circumferentially movable; and a guide plate located on the other of the shift-and-select shaft and the case, the guide plate being provided with a path for guiding the guide pin between positions corresponding to gears. The guide pin includes a cylindrical part. The guide pin includes an insertion to be inserted into the path. A cross section of the insertion includes an outer circumferential edge that includes two mutually parallel linear parts with spacing smaller than an outer diameter of the cylindrical part, and two projections that connect ends of the two linear parts. The projections each include a curved part having a radius of curvature smaller than a radius of the cylindrical part.

## Description

### TECHNICAL FIELD

The present invention relates generally to a shift guide structure.

### BACKGROUND ART

Conventionally, a shift guide structure of a multi-speed transmission, such as a manual transmission (MT) and an automated manual transmission (AMT), has been known. The shift guide structure includes a guide pin located on one of a shift-and-select shaft and a case, a guide plate located on the other and provided with a path for guiding the guide pin among positions corresponding to gears (Patent Document 1).

In Patent Document 1 the guide pin includes a cylindrical member with two flat faces in parallel to each other. The part of the guide pin having the two flat faces, that is, the part including two cylindrical faces and two flat faces is inserted into the path of the guide plate, and moves in the path.

### CITATION LIST

### Patent Literature

Patent Document 1: DE102011083048A1

### SUMMARY OF INVENTION

### PROBLEM TO BE SOLVED BY THE INVENTION

However, the moving part of the guide pin in the path includes corners (shape changing part) in the boundary between the flat faces and the cylindrical faces. Thus, while moving in the path, the corners of the guide pin may be caught by the edge of an opening forming the path of the guide plate, which may make it difficult for the guide pin to smoothly move in the path.

An object of the present invention is to provide a shift guide structure which enables smoother movement of a guide pin and a shift lever.

### MEANS FOR SOLVING PROBLEM

A shift guide structure of a transmission according to the present invention, includes a guide pin located on one of a shift-and-select shaft and a case, the shift-and-select shaft being supported by the case and axially and circumferentially movable; and a guide plate located on the other of the shift-and-select shaft and the case, the guide plate being provided with a path for guiding the guide pin between a plurality of positions corresponding to gears, wherein the guide pin includes a cylindrical part and an insertion to be inserted into the path, a cross section of the insertion includes an outer circumferential edge that includes two mutually parallel linear parts with spacing smaller than an outer diameter of the cylindrical part, and two projections that connect ends of the two linear parts, and the projections each include a curved part having a radius of curvature smaller than a radius of the cylindrical part.

According to the present invention, for example, the cross section of the guide pin inserted into the path has the outer circumferential edge that includes linear parts and projections. A radius of curvature of the curved parts of the projections is smaller than a radius of the cylindrical part. Thus, change of form between the linear parts and the projections (ends) is more gradual than the curved parts having the radius of curvature equal to the radius of the cylindrical part. Thereby, the outer circumferential edge can be unlikely to be caught by the edge of the path. The guide pin and the shift lever can thus move more smoothly.

In the shift guide structure, the curved parts are located between the ends of the linear parts and an intersection between the projections and a cross section center line, the cross section center line being parallel to the two linear parts. While moving among adjacent shift paths, the part of the guide pin between the linear parts and the longitudinal center line of the cross section is likely to contact the edge of the path. With such a structure, thus, the guide pin and the shift lever can move more smoothly among the shift paths, for example.

In the shift guide structure, the projections are smoothly connected to the two linear parts and are smoothly continuous in its entirety. With such a structure, for example, the outer circumferential edge is smooth as a whole, therefore, is prevented from being caught by the edge of the path. Thus, the guide pin and the shift lever can move more smoothly.

The shift guide structure of the transmission, includes a guide pin located on one of a shift-and-select shaft and a case, the shift-and-select shaft being supported by the case and axially and circumferentially movable; and a guide plate located on the other of the shift-and-select shaft and the case, the guide plate being provided with a path for guiding the guide pin between a plurality of positions corresponding to gears, wherein the guide pin includes an insertion that is allowed to be inserted into the path, and the insertion has an oval cross section. Such a structure advantageously enables, for example, simpler and more accurate manufacturing and inspection.

In the shift guide structure, the guide pin includes a distal end of the insertion, and the guide plate is provided with an opening that forms the path and accommodates the distal end. With such a structure, for example, the distal end of the guide pin does not project from the opening. Thereby, the axial length of the guide pin can be shortened in comparison with the guide pin of which the distal end projects from the opening. This can reduce load applied to the guide pin, improving the durability of the guide pin.

### BRIEF DESCRIPTION OF DRAWINGS

FIG. 1 is an exemplary and schematic perspective view of a shift guide structure according to an embodiment;
FIG. 2 is an exemplary and schematic front view of the shift guide structure according to the embodiment, as viewed in an axial direction;
FIG. 3 is an exemplary and schematic front view of an opening serving as a path in a guide plate of the shift guide structure according to the embodiment;
FIG. 4 is an exemplary and schematic perspective view of a guide pin of the shift guide structure according to the embodiment;
FIG. 5 is an exemplary and schematic front view of the guide pin of the shift guide structure according to the embodiment, as viewed in an axial direction of the guide pin;
FIG. 6 is an exemplary and schematic front view of an insertion of the guide pin of the shift guide structure according to a first modification, as viewed in the axial direction of the guide pin; and
FIG. 7 is an exemplary and schematic front view of an insertion of a guide pin of the shift guide structure according to a second modification, as viewed in an axial direction of the guide pin.

### DESCRIPTION OF EMBODIMENTS

Hereinafter, exemplary embodiment and modifications of the present invention will be disclosed. The structures of the embodiment and modifications described hereinafter and functions, results, and effects attained by the structures are merely exemplary. The present invention is attainable by structures other than the structures disclosed in the following embodiments and modifications. The present invention can implement at least one of various effects and derivative effects attained by the structures.

### Embodiment

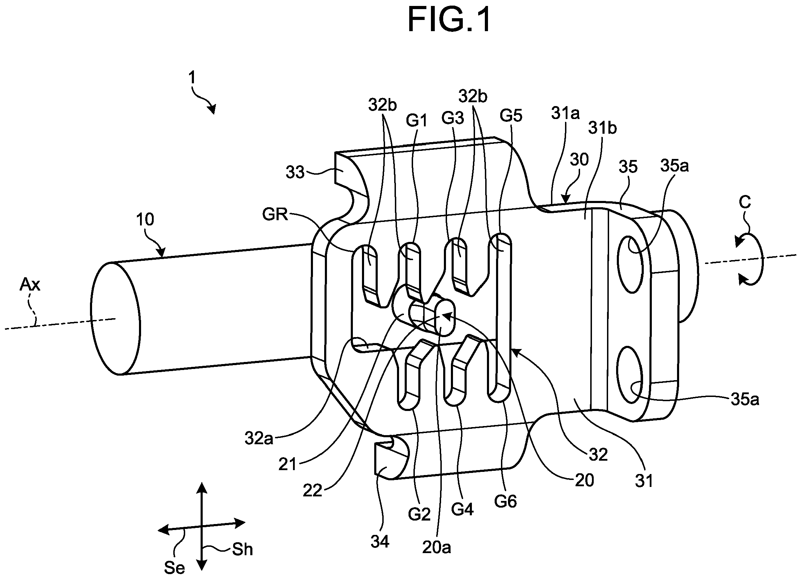

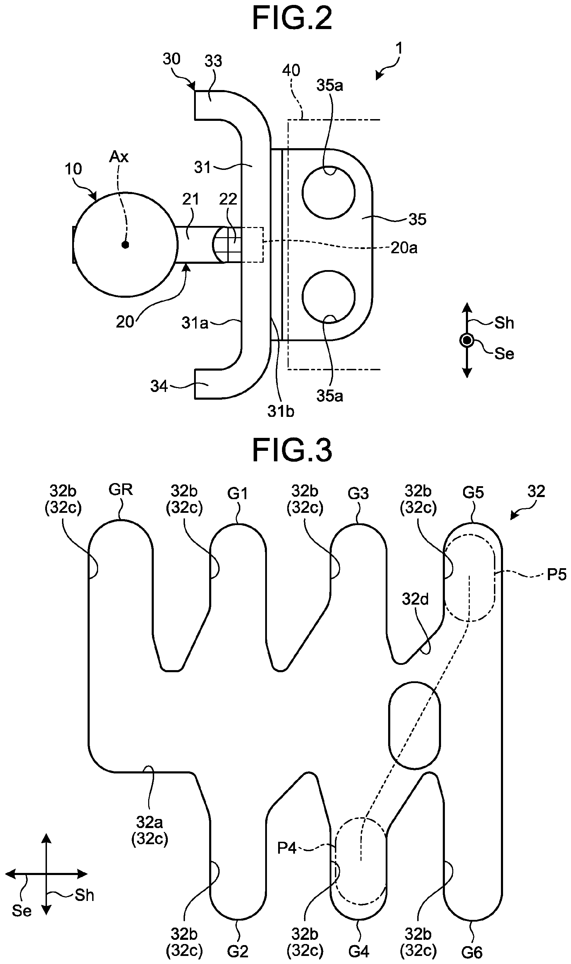

FIG. 1 is a perspective view of a shift guide structure 1 of a multi-speed transmission. FIG. 2 is a front view of the shift guide structure 1 as viewed in an axial direction. In the following, the axial direction of a rotation center Ax of a shift-and-select shaft 10 is simply referred to as axial direction, a circumferential direction of the rotation center Ax is simply referred to as circumferential direction, and a radial direction of the rotation center Ax is simply referred to as radial direction.

As illustrated in FIG. 1, the shift guide structure 1 includes a shift-and-select shaft 10, a guide pin 20, and a guide plate 30.

The shift-and-select shaft 10 is movably supported by a case 40 (FIG. 2) in the axial direction (Se direction) and the circumferential direction (C direction). The shift-and-select shaft 10 operates in coordination with the operation of a shift lever (not illustrated). Various known mechanisms and/or structures are applicable as a transmission mechanism that transmits the operation of the shift lever to the shift-and-select shaft 10 to move the shift-and-select shaft 10.

As illustrated in FIG. 1 and FIG. 2, in the present embodiment, the guide pin 20 is fixed to the shift-and-select shaft 10, and the guide plate 30 is fixed to the case 40. The shift guide structure 1 is configured such that the guide pin 20 and the guide plate 30 relatively move in accordance with the axial and circumferential movement of the shift-and-select shaft 10. In the shift guide structure, the guide pin 20 may be fixed to the case 40 and the guide plate 30 may be fixed to the shift-and-select shaft 10, although not illustrated.

The guide pin 20 projects outward in the radial direction from the outer circumference of the shift-and-select shaft 10. The guide pin 20 is fixed to the shift-and-select shaft 10. The guide pin 20 thus moves in the axial direction and the circumferential direction together with the axial and circumferential movement of the shift-and-select shaft 10.

As illustrated in FIG. 2, the guide plate 30 is fixed to the case 40. The guide plate 30 includes a base wall 31 being a flat plate. The base wall 31 extends in a direction orthogonal to the radial direction and in the axial direction. The base wall 31 includes faces 31a and 31b. The face 31a opposes the shift-and-select shaft 10. The face 31b is opposite the face 31a.

As illustrated in FIG. 1, the base wall 31 is provided with an opening 32 serving as a path in which the guide pin 20 moves. The opening 32 penetrates through the faces 31a and 31b. The guide pin 20 is inserted into the opening 32.

FIG. 3 is a front view of the opening 32. The opening 32 includes a slit being a select path 32a and slits being shift paths 32b. The select path 32a serves to guide the guide pin 20 in a select direction (Se direction). The shift paths 32b serve to guide the guide pin 20 in a shift direction (Sh direction). The one select path 32a extends in the select direction and the parallel shift paths 32b are orthogonal to the select path 32a with spacing. The select path 32a extends across the center of the shift paths 32b. Both ends of the respective shift paths 32b serve as gates G1 to G6 and GR of the respective gears.

In the present embodiment, the guide pin 20 moves in the select direction (Se direction) along with the axial movement of the shift-and-select shaft 10. The guide pin 20 also moves in the shift direction (Sh direction) along with the circumferential (C direction) movement of the shift-and-select shaft 10. However, in the shift-and-select shaft 10 and the shift guide structure 1, the axial direction may correspond to the shift direction and the circumferential direction may correspond to the select direction.

In accordance with the axial and circumferential position (posture) of the shift-and-select shaft 10, a shift fork of the transmission selectively operates through a selector mechanism (not illustrated), thereby switching the gears of the transmission. In the position and posture of the shift-and-select shaft 10 corresponding to the guide pin 20 located at the gate G1, the transmission shifts through the 1-speed gear (gearset). Likewise, in the positions and postures of the shift-and-select shaft 10 corresponding to the guide pin 20 located at the gates G2 to G6, the transmission shifts through the 2- to 6-speed gears. In the position and posture of the shift-and-select shaft 10 corresponding to the guide pin 20 located at the gate GR, the transmission shifts through the reverse gear.

As illustrated in FIG. 1 and FIG. 2, the guide plate 30 includes two reinforcing walls 33 and 34 and an attachment wall 35 in addition to the base wall 31. The reinforcing walls 33 and 34 project from the respective ends of the base wall 31 in the shift direction (Sh direction) at a substantially fixed height in a direction crossing the base wall 31, extending in the select direction (Se direction). The two reinforcing walls 33 and 34 are parallel to each other. The reinforcing walls 33 and 34 can enhance the rigidity of the guide plate 30. The reinforcing walls 33 and 34 are separated from the attachment wall 35 for attachment to the case 40. The attachment wall 35 projects from the base wall 31 to be away from the shift-and-select shaft 10. Specifically, the attachment wall 35 projects from the end of the face 31b of the base wall 31 in the select direction (Se direction) to be away from the shift-and-select shaft 10. The attachment wall 35 is provided with openings 35a through which fasteners such as bolts (not illustrated) are inserted. The attachment wall 35 also contributes to improvement in rigidity of the guide plate 30. With such structure, thus, the reinforcing walls 33 and 34 and the attachment wall 35 can further improve the rigidity of the guide plate 30. In the embodiment in which the guide plate 30 is fixed to the shift-and-select shaft 10, the attachment wall 35 is attached to the shift-and-select shaft 10.

As illustrated in FIG. 1, the two reinforcing walls 33 and 34 have different lengths. Due to the different positions and different lengths, the two reinforcing walls 33 and 34 can be advantageously avoided from interfering with peripheral components, in comparison with the two reinforcing walls 33 and 34 having the same position and length. That is, such a structure can advantageously enhance the degree of freedom of layout of the guide plate 30 and peripheral components. The two reinforcing walls 33 and 34 can thus more efficiently reinforce the guide plate 30. In addition, the reinforcing wall 33 projects from the side adjacent to the four gates G1, G3, G5, and GR, and the reinforcing wall 34 projects from the side adjacent to the three gates G2, G4, and G6. Thus, the reinforcing wall 33 faces a larger number of gates, i.e., G1, G3, G5, and GR and can be elongated to effectively reinforce the base wall 31.

As illustrated in FIG. 2, the reinforcing wall 33, the base wall 31, and the reinforcing wall 34 surround, in U-form, the outer circumference of the shift-and-select shaft 10. In other words, the reinforcing walls 33 and 34 project from the base wall 31 toward the shift-and-select shaft 10. By such structure, the structure including the shift-and-select shaft 10 and the shift guide structure 1 can be prevented from radially increasing in size.

In the structure as described above, the guide pin 20 moves among the gates G1 to G6 and GR in the opening 32, in accordance with a shift operation by the driver and/or the actuator. While moving in the opening 32 (path), the outer circumference of the guide pin 20 contacts an edge 32c (inner edge) of the opening 32.

In this case, it is not preferable that the guide pin 20 be deformed due to the contact with the edge 32c. However, thickening the guide pin 20 as a countermeasure may cause increase in the sizes of the guide plate 30 and the shift guide structure 1.

The guide pin 20 may include a shape changing part, such as a projection and a corner, in the outer circumference. Such a shape changing part may hit the edge 32c of the opening 32 and hinder smooth movement of the guide pin 20 among the gates G1 to G6 and GR, for example. The guide pin 20 is likely to be hindered from smoothly moving, in particular, when moving from the gate G4 to the gate G5 across the multiple shift paths 32b, as illustrated in FIG. 3.

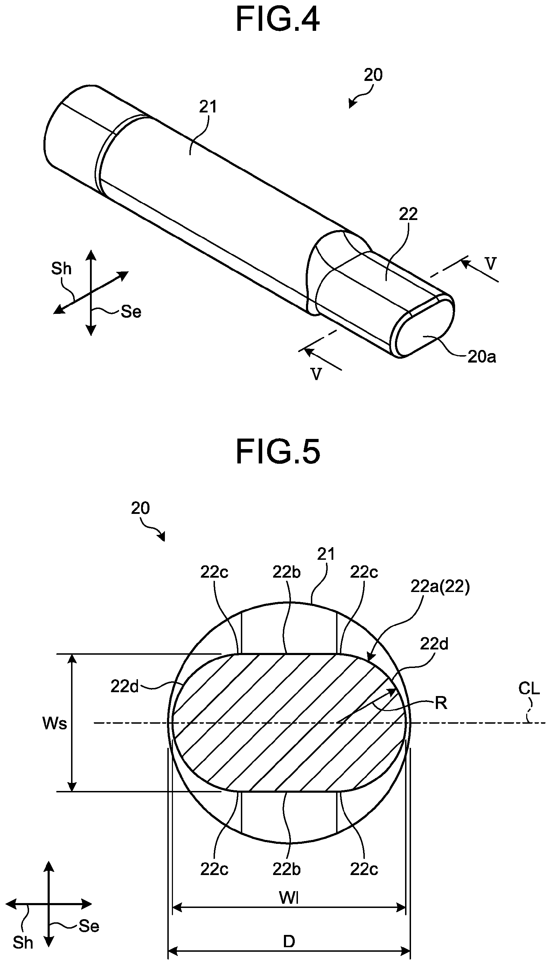

In view of this, the guide pin 20 is structured to avoid such inconvenience as above. FIG. 4 is a perspective view of the guide pin 20, FIG. 5 is a cross-sectional view of the guide pin 20 taken along line V-V of FIG. 4, more specifically, in a direction orthogonal to the longitudinal direction of an insertion 22, that is, in a direction orthogonal to the radial direction.

As is seen from FIG. 4, the cross section of the insertion 22 as illustrated in FIG. 5 has a fixed form in a certain length in the longitudinal direction (radial direction of the shift-and-select shaft 10) of the guide pin 20. Specifically, the outer circumference of the insertion 22 is a ruled face having a bas parallel to the longitudinal direction of the guide pin 20.

As illustrated in FIG. 4 and FIG. 5, the guide pin 20 includes a cylindrical part 21 and the insertion 22. The cylindrical part 21 includes a connector to the shift-and-select shaft 10. The insertion 22 includes a distal end 20a of the guide pin 20. The distal end 20a of the guide pin 20 also serves as the distal end of the insertion 22. The insertion 22 is thinner than the cylindrical part 21, and inserted into the opening 32. The distal end 20a is contained in the opening 32. That is, the distal end 20a does not project from the opening 32.

Thus, according to the present embodiment, the cylindrical part 21 is thicker than the insertion 22, which can enhance the rigidity and the strength of the guide pin 20 in comparison with the guide pin including no cylindrical part 21. In addition, the insertion 22 thinner than the cylindrical part 21 leads to a more compact-size shift guide structure 1 than the insertion 22 with the same thickness as the cylindrical part 21. In the present embodiment the insertion 22 is located at the distal end of the guide pin 20, but the insertion 22 may be located in the longitudinal middle part of the guide pin 20.

In addition, as illustrated in FIG. 5, an outer circumferential edge 22a of the cross section of the insertion 22 includes two parallel linear parts 22b and two projections 22d that connect ends 22c of the two linear parts 22b. As illustrated in FIG. 5, the interval between the two linear parts 22b, that is, the lateral width Ws of the outer circumferential edge 22a is shorter than the longitudinal width Wl of the outer circumferential edge 22a. As is seen from FIG. 1 and FIG. 3, the insertion 22 is contained in the opening 32 in a posture extending long in the shift direction (Sh direction). That is, the lateral width Ws of the insertion 22 in the select direction (Se direction) is shorter than the longitudinal width Wl in the shift direction.

According to the present embodiment, owing to such a shape and a posture of the insertion 22, the intervals among the shift paths 32b in the guide plate 30 can be narrowed, which enables the shift guide structure 1 to be more compact in size. Further, the insertion 22 has a cross section longer in the shift direction. This can improve the rigidity and strength of the guide pin 20 against the force applied from the edge 32c in the shift direction when the insertion 22 moves to each of the gates G1 to G6 and GR and hits the edge 32c of the opening 32.

In addition, as illustrated in FIG. 5, in the present embodiment, the projections 22d have a semicircular shape, and have a radius R equal to a half of the lateral width Ws. The outer circumferential edge 22a is in oval form as a whole. Specifically, the outer circumferential edge 22a includes parallel parts (two linear parts 22b) and two semicircles (projections 22d) located at both ends of the parallel parts and having a diameter being the interval between the parallel parts.

Thus, according to the present embodiment, owing to the oval-shape outer circumferential edge 22a of the cross section of the insertion 22, simpler or more accurate manufacturing and inspection is advantageously feasible.

As illustrated in FIG. 5, in the present embodiment, it can be said that the projections 22d each include a semicircular curved part. As is seen from FIG. 5, the radius R of the projections 22d, that is, the radius of curvature of the curved parts is smaller than the radius (1/2 of the diameter D) of the cylindrical part 21.

According to the present embodiment, thus, the radius R (radius of curvature of the curved part) of the projections 22d is smaller than the radius of the cylindrical part 21, so that change of form between the linear parts 22b and the projections 22d (ends 22c) is more gradual than the projections 22d having the same radius R as the radius of the cylindrical part 21. This prevents the outer circumferential edge 22a from being caught by the edge 32c of the opening 32. That is, the guide pin 20 can more smoothly move in the opening 32.

In addition, as illustrated in FIG. 5, the outer circumferential edge 22a is smooth as a whole. Specifically, the linear parts 22b and the projections 22d are smoothly continuous, and the projections 22d are smoothly continuous in its entirety. The expression "smoothly continuous" signifies that, when the outer circumferential edge 22a is expressed as a function y = f(x) of a variable x in the Sh direction and a variable y in the Se direction, for example, the function y = f(x) is continuous at each point x and is differentiable with x.

According to the present embodiment, thus, the smooth outer circumferential edge 22a as a whole is unlikely to be caught by the edge 32c of the opening 32. Thereby, the guide pin 20 can more smoothly move in the opening 32.

In addition, as illustrated in FIG. 5, the longitudinal width Wl of the cross section of the insertion 22 is shorter than the outer diameter D of the cylindrical part 21.

To form the guide pin 20 from a cylindrical material by cutting and form the insertion 22 having the longitudinal width Wl equal to the outer diameter D of the cylindrical part 21, for example, both longitudinal ends need to remain uncut, which may make it difficult to accurately process the insertion 22. In this respect, according to the present embodiment, the longitudinal width Wl of the cross section of the insertion 22 is smaller than the outer diameter D of the cylindrical part 21, therefore, the insertion 22 and both longitudinal ends can be accurately processed.

In addition, in the present embodiment, the attachment wall 35 projects from the base wall 31 away from the shift-and-select shaft 10. According to the present embodiment, for example, the guide plate 30 can come closer to the shift-and-select shaft 10, which can downsize the shift guide structure 1.

In the present embodiment, the guide pin 20 includes the distal end 20a of the insertion 22, and the guide plate 30 is provided with the opening 32 that accommodates the distal end 20a. With this structure, for example, the distal end 20a of the guide pin 20 does not project from the opening 32, therefore, can decrease in axial length in comparison with the guide pin of which the distal end projects from the opening. Thereby, load applied to the guide pin 20 can be reduced, improving the durability of the guide pin 20.

### First Modification

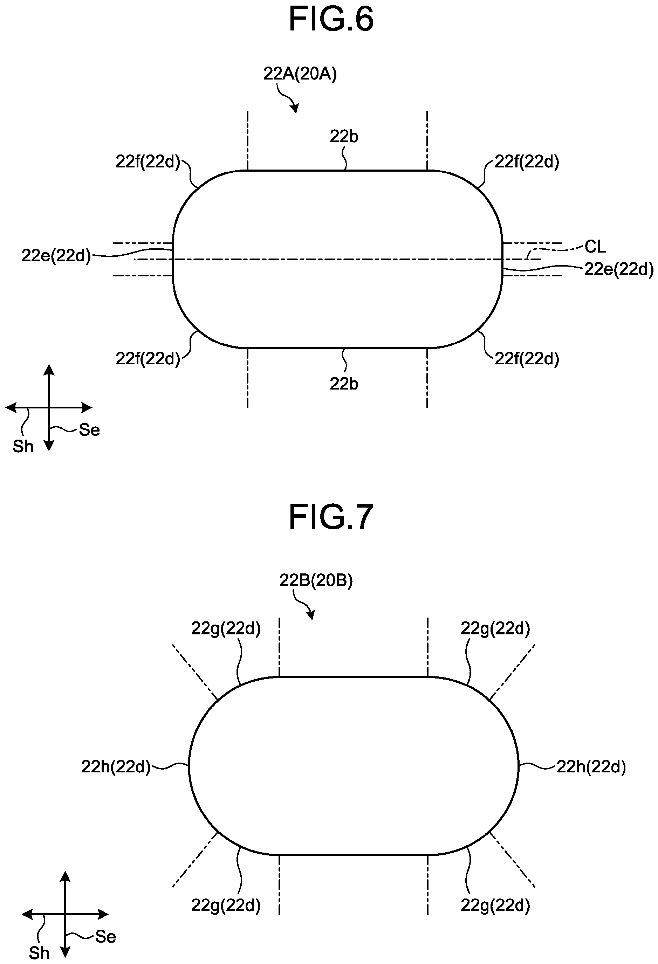

FIG. 6 is a cross-sectional view (in a position equivalent to FIG. 5) of an insertion 22A of a guide pin 20A according to a modification in a direction orthogonal to the longitudinal direction, that is, a direction orthogonal to the radial direction.

The guide pin 20A according to the first modification is the same as that in the above embodiment, except for a different shape of the insertion 22A. The first modification also attains similar results (effects) based on the structure similar to that of the above embodiment.

In the first modification, however, an outer circumferential edge 22a of the cross section of the insertion 22A includes projections 22d each of which includes a linear part 22e and curved parts 22f. The linear part 22e is located at a center of the projection 22d in the select direction (Se direction). The linear part 22e extends in the select direction. The curved parts 22f are arcs (1/4 circles) smoothly connected to the linear part 22b and the linear part 22e.

In the first modification, the outer circumferential edge 22a is smooth as a whole. The outer circumferential edge 22a is thus unlikely to be caught by the edge 32c of the opening 32, so that the guide pin 20A can move more smoothly in the opening 32.

In addition, in the first modification, the curved parts 22f are located between the linear parts 22b and a longitudinal center line CL of the cross section, as illustrated in FIG. 6. The center line CL is located between the two linear parts 22b in parallel to the two linear parts 22b. When the guide pin 20A moves among the shift paths 32b, for example, from the position P4 of the gate G4 to the position P5 of the gate G5, as illustrated in FIG. 3, the part between the linear part 22b and the longitudinal center line CL of the cross section is likely to contact the edge 32c of the opening 32, in particular, a diagonal part 32d illustrated in FIG. 3. In this respect, in the first modification, the cross section includes the curved parts 22f at the contact position with the diagonal part 32d, therefore, the guide pin 20A can more smoothly move among the shift paths 32b.

### Second Modification

FIG. 7 is a cross-sectional view (in a position equivalent to FIG. 5) of an insertion 22B of a guide pin 20B according to a modification in a direction orthogonal to the longitudinal direction, that is, a direction orthogonal to the radial direction.

The guide pin 20B according to the present modification is the same as that in the embodiment or the first modification, except for a different shape of the insertion 22B. The second modification also attains similar results (effects) based on the structure similar to that of the embodiment or the first modification.

However, in the second modification, the projections 22d each include three curved parts 22g, 22h, and 22g. The curved parts 22g are, for example, part of an oval, and the curved parts 22h are, for example, arcs. The linear parts 22b and the curved parts 22g are smoothly continuous, and the curved parts 22g and the curved parts 22h are smoothly continuous. Also in the second modification, the outer circumferential edge 22a is smooth as a whole. Thereby, the outer circumferential edge 22a is unlikely to be caught by the edge 32c of the opening 32, and the guide pin 20B can more smoothly move in the opening 32.

The embodiments of the present invention have been exemplified, but the embodiments are mere exemplary, and not intended to limit the scope of the present invention. Embodiments may be carried out in other various forms, and various omissions, replacement, combinations, and changes are possible within the scope not departing from the gist of the invention. The specifications (such as structure, type, direction, shape, size, length, width, height, number, arrangement, and position) of the elements and the forms, can be properly changed.

### EXPLANATIONS OF LETTERS OR NUMERALS

- 1: SHIFT GUIDE STRUCTURE
- 10: SHIFT-AND-SELECT SHAFT
- 20, 20A, 20B: GUIDE PIN
- 20a: DISTAL END
- 21: CYLINDRICAL PART
- 22, 22A, 22B: INSERTION
- 22a: OUTER CIRCUMFERENTIAL EDGE
- 22b: LINEAR PART
- 22c: END
- 22d: PROJECTION (CURVED PART)
- 22f, 22g, 22h: CURVED PART
- 30: GUIDE PLATE
- 32: OPENING (PATH)
- 40: CASE
- D: DIAMETER
- Wl: WIDTH (IN LONGITUDINAL DIRECTION OF CROSS SECTION)

## Claims

1. A shift guide structure of a transmission, the structure comprising:
a guide pin located on one of a shift-and-select shaft and a case, the shift-and-select shaft being supported by the case and axially and circumferentially movable; and
a guide plate located on the other of the shift-and-select shaft and the case, the guide plate being provided with a path for guiding the guide pin between a plurality of positions corresponding to gears, wherein
the guide pin includes a cylindrical part and an insertion to be inserted into the path,
a cross section of the insertion includes an outer circumferential edge that includes two mutually parallel linear parts with spacing smaller than an outer diameter of the cylindrical part, and two projections that connect ends of the two linear parts, and
the projections each include a curved part having a radius of curvature smaller than a radius of the cylindrical part.

2. The shift guide structure according to claim 1, wherein
the curved parts are located between the ends of the linear parts and an intersection between the projections and a cross section center line, the cross section center line being parallel to the two linear parts.

3. The shift guide structure according to claim 1 or 2, wherein
the projections are smoothly connected to the two linear parts and are smoothly continuous in its entirety.

4. A shift guide structure of a transmission, the structure comprising:
a guide pin located on one of a shift-and-select shaft and a case, the shift-and-select shaft being supported by the case and axially and circumferentially movable; and
a guide plate located on the other of the shift-and-select shaft and the case, the guide plate being provided with a path for guiding the guide pin between a plurality of positions corresponding to gears, wherein
the guide pin includes an insertion that is allowed to be inserted into the path, and
the insertion has an oval cross section.

5. The shift guide structure according to any one of claims 1 to 4, wherein
the guide pin includes a distal end of the insertion, and
the guide plate is provided with an opening that forms the path and accommodates the distal end.

## Amended claims

### Amended claims under Art. 19.1 PCT

1. A shift guide structure of a transmission, the structure comprising:
a guide pin located on one of a shift-and-select shaft and a case, the shift-and-select shaft being supported by the case and axially and circumferentially movable; and
a guide plate located on the other of the shift-and-select shaft and the case, the guide plate being provided with a path for guiding the guide pin between a plurality of positions corresponding to gears, wherein
the guide pin includes a cylindrical part and an insertion to be inserted into the path,
a cross section of the insertion includes an outer circumferential edge that includes two mutually parallel linear parts with spacing smaller than an outer diameter of the cylindrical part, and two projections that connect ends of the two linear parts, and
the projections each include a curved part having a radius of curvature smaller than a radius of the cylindrical part.

2. The shift guide structure according to claim 1, wherein
the curved parts are located between the ends of the linear parts and an intersection between the projections and a cross section center line, the cross section center line being parallel to the two linear parts.

3. The shift guide structure according to claim 1 or 2, wherein
the projections are smoothly connected to the two linear parts and are smoothly continuous in its entirety.

4. (Deleted)

5. (Amended) The shift guide structure according to any one of claims 1 to 3, wherein
the guide pin includes a distal end of the insertion, and
the guide plate is provided with an opening that forms the path and accommodates the distal end.

Statement under Art. 19.1 PCT
Claim 4 is deleted.

Claim 5 is amended to depend on claims 1 to 3.
